# EUROPÄISCHE PATENTSCHRIFT

(11) **EP 2 738 752 B1**
(45) Veröffentlichungstag und Bekanntmachung des Hinweises auf die Patenterteilung: **10.10.2018**
(21) Anmeldenummer: 13004148.6
(22) Anmeldetag: 22.08.2013
(51) Int. Cl.: G08G 1/16, B60W 30/09, B60W 30/12, B60W 30/08, B60W 50/14

(54) **Fahrerassistenzsystem zur Unterstützung eines Fahrzeugführers beim Betrieb eines Fahrzeugs, insbesondere eines Kraft- und/oder Nutzfahrzeugs**
Driver assistance system for assisting the driver of a vehicle during the operation of a vehicle, in particular for a motor vehicle and/or commercial vehicle
Système d'aide à la conduite pour assister un conducteur de véhicule lors du fonctionnement d'un véhicule, en particulier d'un véhicule automobile et/ou d'un véhicule utilitaire

(30) Priorität: 01.12.2012 DE 102012023563
(43) Veröffentlichungstag der Anmeldung: 04.06.2014
(73) Patentinhaber: MAN Truck & Bus AG, 80995 München (DE)
(72) Erfinder: Hipp, Eberhard, 80809 München (DE); Dörner, Karlheinz, 85757 Karlsfeld (DE); Schwertberger, Walter, 82278 Althegnenberg (DE)
(74) Vertreter: Liebl, Thomas

(56) Entgegenhaltungen:
- DE-A1- 10 354 290
- DE-A1-102007 001 117
- DE-A1-102010 050 573
- DE-A1-102010 061 829

## Beschreibung

Die Erfindung betrifft ein Fahrerassistenzsystem zur Unterstützung eines Fahrzeugführers beim Betrieb eines Fahrzeugs, insbesondere eines Kraft- und/oder Nutzfahrzeugs, nach dem Oberbegriff des Anspruchs 1.

Fahrerassistenzsysteme sind Zusatzeinrichtungen am Fahrzeug, die den Fahrzeugführer während der Fahrt sowie beim Betrieb des Fahrzeugs unterstützen und/oder entlasten sollen. Oftmals werden in Verbindung mit derartigen Fahrerassistenzsystemen Erfassungseinrichtungen, wie zum Beispiel Sensoren, Kameras, etc. eingesetzt, die das jeweilige Fahrzeugumfeld und/oder die Fahrsituation erfassen und diese erfassten Daten dann an Überwachungseinrichtungen - (Steuergeräte) übermitteln. Die Steuergeräte analysieren laufend die mit Hilfe der Erfassungseinrichtungen gewonnenen Informationen und versuchen daraus möglichst frühzeitig eine evt. Gefahrensituation ableiten zu können. Im Falle des Erkennens einer Gefahrensituation können die Fahrerassistenzsysteme dann innerhalb von wenigen Sekundenbruchteilen, unabhängig vom Fahrzeugführer, selbstständig geeignete Maßnahmen einleiten, um eine drohende Kollision zu vermeiden. Von den Überwachungseinrichtungen werden dabei regelmäßig Stellglieder, sogenannte Aktoren, angesteuert, die die Befehle in der gewünschten Weise umsetzen. Dies kann zum Beispiel ein einfaches Warnsignal (passive Warneinrichtung) für den Fahrer sein oder ein gezielter, aktiver Eingriff in die Fahrzeugführung, wie beispielsweise ein gezielter Bremseingriff.

Insbesondere in Verbindung mit Nutzfahrzeugen ist bereits der Einsatz von Spurhalteassistenzsystemen (Lane-Guard-System) bekannt, die den Fahrzeugführer auf ein unbeabsichtigtes Überfahren der Fahrbahnmarkierung hinweisen. Die Fahrspur wird hierbei optisch mit einer Videokamera hinter der Windschutzscheibe erfasst. Das Spurhalteassistenzsystem wertet durch das Videobild die seitlichen Fahrbahnmarkierungen aus. Das System kann zum Beispiel durch einen Wippschalter aktiviert werden und ist zum Beispiel ab einer vorgegebenen Geschwindigkeit, zum Beispiel 60 km/h, aktiv. Der Fahrzeugführer wird beispielsweise unter 75 km/h bereits beim Berühren (was typisch wäre für Landstraßen) und über 75 km/h beim Überfahren (üblicherweise auf Autobahnen) der Fahrbahnmarkierung (ohne Blinkerbetätigung) durch ein sogenanntes Nagelbandrattern aus dem linken oder rechten Lautsprecher gewarnt, welche der seitlichen Fahrbahnmarkierungen gerade unbeabsichtigt überfahren wird. Durch die seitenbezogene Ausgabe wird das Warngeräusch vom Fahrer intuitiv richtig verstanden.

Die Druckschrift DE 103 54 290 A1 offenbart ein Fahrerassistenzsystem zur Ermittlung einer Fahrspur bei schwierigen Umgebungsbedingungen wie zum Beispiel in Tunneln.

Herkömmliche Fahrerassistenzsysteme bieten somit bereits eine gute, grundlegende Sicherheit für einen optimierten Fahrzeugbetrieb. Insbesondere bei streckenspezifischen Besonderheiten, wie beispielsweise Tunneldurchfahrten, stoßen jedoch derartige herkömmliche Fahrerassistenzsysteme oftmals an ihre Grenzen, da dort die fahrstreckenspezifischen Parameter so unterschiedlich zu den herkömmlichen Fahrstreckenparametern sind, dass es trotz des Einsatzes von Fahrerassistenzsystemen gegebenenfalls zu unerwünschten kritischen Situationen kommen kann. Insbesondere beim Durchfahren von Tunneln mit Nothaltebuchten kann es bei Fahrfehlern bzw. Spurabweichungen im Bereich der Nothaltebuchten zu einem erhöhten Kollisionsrisiko kommen.
Es ist daher Aufgabe der vorliegenden Erfindung, ein Fahrerassistenzsystem zur Unterstützung eines Fahrzeugführers beim Betrieb eines Fahrzeugs, insbesondere eines Kraft- und/oder Nutzfahrzeugs, zur Verfügung zu stellen, mittels dem der Fahrzeugführer beim Durchfahren eines Nothaltebuchten aufweisenden Tunnels dergestalt unterstützt wird, dass bei einem unbeabsichtigtem Befahren einer Nothaltebucht eine Kollision des Fahrzeugs mit den Tunnelwänden möglichst vermieden bzw. wenigstens vermindert wird. Diese Aufgabe wird gelöst mit den Merkmalen der unabhängigen Patentansprüche. Vorteilhafte Ausgestaltungen hierzu sind Gegenstand der darauf rückbezogenen Unteransprüche.
Erfindungsgemäß wird vorgeschlagen, dass das zur Überwachung der Tunneldurchfahrt eines Fahrzeugs, insbesondere eines Kraft- und/oder Nutzfahrzeugs, ausgelegte und/oder hergerichtete Fahrerassistenzsystem eine fahrzeugseitige Überwachungseinrichtung aufweist, die, bei einer im Bereich einer Nothaltebucht erfassten Spurabweichung des Fahrzeugs und/oder bei einem erfassten Einfahren des Fahrzeugs in eine Nothaltebucht, eine den Fahrer warnende passive Sicherheitseinrichtung und/oder eine auf die Fahrzeugführung aktiv Einfluss nehmende aktive Sicherheitseinrichtung dergestalt aktiviert, dass die Kollision mit einer nothaltebuchtseitigen Tunnelwand verhindert oder zumindest in der Schwere reduziert ist.
Mit einem derartigen erfindungsgemäßen Fahrerassistenzsystem erfolgt eine vorteilhafte Überwachung der Tunneldurchfahrt, die ein unbeabsichtigtes Befahren einer Nothaltebucht verhindert bzw. zumindest in der Schwere reduziert.

Erfindungsgemäß wird vorgeschlagen, dass wenigstens eine die Nothaltebucht charakterisierende und/oder kennzeichnende Nothaltebucht-Signaleinrichtung vorgesehen ist, die nothaltebuchtseitig und/oder tunnelseitig angeordnet ist. Beispielsweise weist die wenigstens eine tunnelseitige Nothaltebucht wenigstens eine von der fahrzeugseitigen Überwachungseinrichtung erfassbare und die Nothaltebucht charakterisierende und/oder kennzeichnende Nothaltebucht-Signaleinrichtung auf. Die Überwachungseinrichtung kann somit die wenigstens eine Nothaltebucht-Signaleinrichtung erfassen und damit das Vorhandensein einer Nothaltebucht feststellen. Nach der Erfassung der Nothaltebucht überwacht die Überwachungseinrichtung weiter, ob das Fahrzeug im Bereich der erfassten Nothaltebucht in einem definierten Maße von der Fahrspur abweicht und/oder ob das Fahrzeug in die erfasste Nothaltebucht einfährt. Im Falle einer im Bereich der Nothaltebucht erfassten Spurabweichung des Fahrzeugs und/oder im Falle eines erfassten Einfahrens des Fahrzeugs in die Nothaltebucht kann dann die Überwachungseinrichtung die den Fahrer warnende passive Sicherheitseinrichtung und/oder die auf die Fahrzeugführung aktiv Einfluss nehmende aktive Sicherheitseinrichtung aktivieren.
Bei einer derartigen vorteilhaften Ausführungsform wirkt somit der fahrzeugseitig angeordnete Teil des Fahrerassistenzsystems mit einem tunnelseitigen bzw. nothaltebuchtseitigen Bestandteil des Fahrerassistenzsystems zusammen, um zumindest auf das Vorhandensein einer Nothaltebucht schließen zu können. Gleichzeitig können hier, was aber nachfolgend ebenfalls nochmals näher erläutert wird, selbstverständlich auch eine Vielzahl von gewünschten Nothaltebucht-Informationen bzw. Nothaltebucht-Parametern übermittelt werden.

Gemäß einer ersten konkreten Ausgestaltung kann die Signaleinrichtung zum Beispiel durch wenigstens eine, vorzugsweise im Bereich der Nothaltebucht und/oder tunnelseitig angebrachte, Markierung gebildet sein, die von der Überwachungseinrichtung, insbesondere von wenigstens einer Erfassungseinrichtung der Überwachungseinrichtung, beim Annähern des Fahrzeugs an die Nothaltebucht erfasst wird. Beispielsweise könnte eine derartige Markierung durch eine speziell zu definierende, nur zur Kenntlichmachung der Nothaltebucht zugelassene Straßenmarkierung gebildet sein. Dies könnte beispielsweise eine doppelt durchgezogene Linie sein, die breit an der Fahrspurbegrenzung und sehr breit außerhalb der Fahrspurbegrenzung ist, um nur ein Beispiel zu nennen. Dieser Linientyp kann dann zum Beispiel mittels der Überwachungseinrichtung bzw. einer Erfassungseinrichtung der Überwachungseinrichtung erkannt, kategorisiert und somit als Nothaltebuchtmarkierung bewertet werden. Selbstverständlich sind neben derartigen bodenseitigen Markierungen auch sämtliche anderen geeigneten Markierungen denkbar. So kann beispielsweise die Markierung durch ein die Nothaltebucht, insbesondere den Beginn einer Nothaltebucht, kennzeichnendes Verkehrsschild gebildet sein. Die wenigstens eine Erfassungseinrichtung ist dann hier beispielsweise durch eine Kamera- und/oder eine Sensoreinrichtung gebildet, vorzugsweise durch eine Bestandteil einer Verkehrszeichen-Erkennungseinrichtung bildende Kamera- und/oder Sensoreinrichtung gebildet, die das die Nothaltebucht kennzeichnende Verkehrsschild sowie die darauf vorhandene Nothaltebucht-Information erfasst und der Überwachungseinrichtung übermittelt. Die Überwachungseinrichtung kann dann bei einem mittels der Erfassungseinrichtung erfassten, die Nothaltebucht kennzeichnenden Verkehrsschild auf das Vorhandensein einer Nothaltebucht schließen.

Weiter alternativ kann die Markierung auch durch einen nothaltebuchtseitig angeordneten und die Nothaltebucht, insbesondere den Beginn einer Nothaltebucht, kennzeichnenden RFID (radio frequency radiation)-Transponder oder -Tag gebildet sein. Die wenigstens eine Erfassungseinrichtung ist in diesem Fall dann durch ein fahrzeugseitiges Lesegerät gebildet, das ein elektromagnetisches Wechselfeld erzeugt, dem der nothaltebuchtseitige RFID-Transponder beim Annähern des Fahrzeugs an die Nothaltebucht ausgesetzt ist, und zwar dergestalt dass die Nothaltebuchtinformation an das Lesegerät übermittelt wird. Die Überwachungseinrichtung kann dann bei einem mittels des Lesegeräts erfassten, die Nothaltebucht kennzeichnenden RFID-Transponder oder -Tag auf das Vorhandensein einer Nothaltebucht schließen.

Derartige, eine Nothaltebucht kennzeichnende Markierungen als Signaleinrichtungen können, je nach der Anordnung der Nothaltebuchten im Tunnel, den Beginn der Nothaltebucht charakterisieren und somit unmittelbar zu Beginn bzw. im Nahbereich vor dem Beginn einer Nothaltebucht (in Fahrtrichtung gesehen) angebracht sein. Gegebenenfalls können diese jedoch auch bereits bei der Einfahrt in den Tunnel vorgesehen bzw. angebracht werden, sofern dann mittels der Überwachungseinrichtung der eigentliche Beginn der Nothaltebucht, zum Beispiel aufgrund von Entfernungsparametern zwischen Beginn der Nothaltebucht und der Tunneleinfahrt, und somit die genaue Lage der Nothaltebucht zuverlässig berechnet werden kann.

Alternativ oder zusätzlich zu einer derartigen, als Markierung ausgebildeten Signaleinrichtung kann diese Signaleinrichtung aber auch durch wenigstens einen Sender gebildet sein, insbesondere durch einen nothaltebuchtseitig angeordneten Sender gebildet sein. Dieser Sender gibt ein die Nothaltebucht, insbesondere den Beginn einer Nothaltebucht, kennzeichnendes Sendesignal ab, das von der Überwachungseinrichtung, insbesondere von einem fahrzeugseitigen Empfänger der Überwachungseinrichtung, beim Annähern des Fahrzeugs an die Nothaltebucht erfasst wird. Grundsätzlich kommen hierfür sämtliche geeigneten Sender-Empfänger-Einheiten in Frage, wobei jedoch der Einsatz eines Infrarotsignals oder eines Ultraschallsignals als Sendesignal und damit entsprechend der Einsatz eines Infrarot-Empfängers bzw. eines Ultraschall-Empfängers bevorzugt ist.

Wie bereits zuvor erwähnt, ist die Signaleinrichtung bevorzugt so ausgebildet, dass mittels dieser eine Vielzahl von, die jeweilige Nothaltebucht charakterisierende Nothaltebucht-Informationen übermittelt wird. Besonders relevante Nothaltebucht-Informationen sind dabei der Beginn der Nothaltebucht sowie die Länge und/oder die Breite der Nothaltebucht, das heißt zum Beispiel auch die gesamte Geometrie der Nothaltebucht. Desweiteren können hier als zusätzliche Tunnelinformationen folgende Informationen übermittelt werden: Anzahl der Nothaltebuchten im Tunnel, Anzahl der Spuren im Tunnel, Spurbreiten, Spurmarkierungsarten, die gesamte Tunnellänge, Sollgeschwindigkeiten, etc..

Alternativ oder ergänzend zur vorstehend im Detail beschriebene Verwendung einer nothaltebuchtseitig bzw. tunnelseitig angeordneten Nothaltebucht-Signaleinrichtung kann auch vorgesehen sein, dass die Information über das Vorhandensein einer Nothaltebucht in einem Bestandteil der Fahrstrecke bildenden Tunnel, in einem Navigationssystem des Fahrzeugs abgespeichert ist, und der Überwachungseinrichtung im Falle des Befahrens des Tunnels übermittelt wird. Die Überwachungseinrichtung überwacht dann nach der Übermittlung der Nothaltebucht-Information durch das Navigationssystem weiter, ob das Fahrzeug beim Durchfahren des Tunnels im Bereich der Nothaltebucht von der Fahrspur abweicht und/oder ob das Fahrzeug beim Durchfahren des Tunnels in die Nothaltebucht einfährt. Im Falle einer im Bereich der Nothaltebucht erfassten Spurabweichung des Fahrzeugs und/oder im Falle eines erfassten Einfahrens des Fahrzeugs in die Nothaltebucht aktiviert dann die Überwachungseinrichtung die den Fahrer warnende passive Sicherheitseinrichtung und/oder die auf die Fahrzeugführung aktiv Einfluss nehmende aktive Sicherheitseinrichtung. Auch hier können wieder über das Navigationssystem, analog zu vorher, eine Vielzahl von die jeweilige Nothaltebucht bzw. den Tunnel charakterisierenden Daten an die Überwachungseinrichtung übermittelt werden, insbesondere wenigstens der Beginn sowie die Länge und/oder die Breite der Nothaltebucht. In Verbindung mit einem derartigen Navigationssystem ist es vorteilhaft, im Fahrzeug ein System installiert zu haben, welches die genaue longitudinale Position des Fahrzeugs im Tunnel erfassen kann. Hierzu kann zum Beispiel die gefahrende Wegstrecke des Fahrzeugs ab dem Tunneleingang erfasst werden, zum Beispiel durch Integration der Raddrehzahlen oder durch Integration eines Ground-Speed-Sensorsignal, um nur einige Beispiele zu nennen.

Gemäß einer zusätzlichen oder alternativen Ausführungsvariante kann vorgesehen sein, dass dem Fahrerassistenzsystem bzw. dem Fahrzeugführer über eine fahrzeugseitige C2I-Schnittstelle mittels C2I-Kommunikation definierte Tunnelinformationen zur Verfügung gestellt werden, also zum Beispiel die Lage bzw. Position von Anfang und Ende einer Ausbuchtung und/oder die Anzahl der Fahrspuren und/oder die Spurbreiten und/oder die Spurmarkierungsarten und/oder die Tunnellänge und/oder die Sollgeschwindigkeit, um nur einige Beispiele zu nennen. Bei der C2I (Car-to-Infrastructure-Communication)-Kommunikation findet eine drahtlose Kommunikation der Fahrzeuge mit Infrastruktureinrichtungen statt. Die Struktur der C2I-Communication ist drahtlos und kann auf der Basis von WLANs nach 802.11a, 802.11b, 802.11g, automotive WLAN 802.11p oder ITS-G5 aufbauen, sie kann aber auch auf Bluetooth oder im Falle von Sensornetzwerken auf ZigBee oder auch auf Dedicated Short Range Communication (DSRC) basieren.

Des weiteren kann das Fahrerassistenzsystem mit einer Seiten-Überwachungseinrichtung ausgestattet sein, mittels der der Abstand zu sowie gegebenenfalls zusätzlich oder alternativ die Höhe von seitlichen Hindernissen, wie zum Beispiel Randsteinen, Tunnelwänden, Leitplanken etc, erfasst und dementsprechend überwacht werden kann. Das heißt, dass zum Beispiel bei Unterschreiten eines vorgegebenen oder voreingestellten Grenzwertes die den Fahrer warnende passive Sicherheitseinrichtung und/oder die auf die Fahrzeugführung aktiv Einfluss nehmende aktive Sicherheitseinrichtung aktiviert wird. Hierzu kann zum Beispiel konkret wenigstens ein Sensor (zum Beispiel in Verbindung mit einem Radar- und/oder Lidar- und/oder Kamera- und/oder Ultraschallsystem, um nur einige Beispiele zu nennen) vorgesehen sein, mittels dem diese Erfassung durchgeführt wird, wobei der wenigstens eine Sensor die Signale dann einer Auswerteeinrichtung der Überwachungseinrichtung zuführt, die wiederum mit der passiven und/oder aktiven Sicherheitseinrichtung gekoppelt ist und diese bei Bedarf entsprechend ansteuert. Eine derartige Überwachungseinrichtung kann somit weiter optional vorteilhaft auch zur Detektion bzw. Vermessung von Nothaltebuchten eingesetzt und verwendet werden.

Die aktive Sicherheitseinrichtung selbst kann grundsätzlich auf unterschiedliche Weise ausgebildet sein. Besonders bevorzugt ist eine aktive Sicherheitseinrichtung, die durch eine auf die Lenkung einwirkende und das Fahrzeug in die Fahrspur zurückführende Spurrückführungseinrichtung gebildet ist. Alternativ oder zusätzlich dazu kann die aktive Sicherheitseinrichtung aber auch durch eine die Fahrzeuggeschwindigkeit in einem definierten Maße reduzierende Verzögerungseinrichtung gebildet sein.

Besonders bevorzugt ist weiter eine Ausführungsform, bei der die Grenzwerte für eine zulässige Fahrspurabweichung bei einer Tunneldurchfahrt mittels der Überwachungseinrichtung so verändert werden, dass diese kleiner sind als die Grenzwerte für eine zulässige Fahrspurabweichung auf einer, keine Tunneldurchfahrt darstellenden normalen Fahrstrecke. Besonders bevorzugt ist hierbei eine Ausführungsform, bei der fahrzeugseitig eine Fahrspurüberwachungseinrichtung und/oder eine Spurrückführungseinrichtung vorgesehen ist, die bevorzugt Bestandteil der Überwachungseinrichtung bildet, mittels der die Grenzwerte für eine Fahrspurabweichung vorgegeben bzw. überwacht werden können. Das heißt, dass bei einer Tunneldurchfahrt dann zum Beispiel die Grenzwerte der zulässigen Spurabweichung enger gesetzt werden können als bei einer freien Fahrstrecke ohne Tunnel, um den Fahrer bei der Einhaltung einer hohen Spurtreue intensiv zu unterstützen. Damit möglicherweise einhergehende höhere Warnraten von Sicherheitseinrichtungen, insbesondere von passiven, aber gegebenenfalls auch von aktiven Sicherheitseinrichtungen bzw. Warnsystemen, sind in diesem Fall tolerabel und dienen dazu, die Aufmerksamkeit des Fahrers in gewünschter Weise vermehrt auf die Spurführung zu lenken.

Im Falle einer die Fahrzeuggeschwindigkeit in einem definierten Maße reduzierenden Verzögerungseinrichtung als aktive Sicherheitseinrichtung ist es vorteilhaft, das Maß für die jeweilige Fahrzeugverzögerung von der Verzögerungseinrichtung in Abhängigkeit von der jeweils erfassten und/oder ermittelten Nothaltebuchtbeschaffenheit und/oder in Abhängigkeit von der aktuell erfassten Fahrzeuggeschwindigkeit vorzugeben. Insbesondere in Verbindung mit der Fahrzeuggeschwindigkeit kann vorgesehen sein, dass die Fahrzeugverzögerung dergestalt vorgegeben wird, dass bei einer, einen definierten Geschwindigkeitsschwellwert überschreitenden aktuellen Fahrzeuggeschwindigkeit eine Notbremsung eingeleitet wird. Eine derartige Notbremsung kann beispielsweise mittels einer separaten Notbremseinrichtung des Fahrzeugs eingeleitet werden.

Gegebenenfalls könnte auch die Kombination des Fahrerassistenzsystems mit einem Speed Limiter vorteilhaft sein, der den Fahrzeugführer bei Überschreiten einer zuvor eingegebenen Höchstgeschwindigkeit bzw. bei Überschreiten einer erfassten Geschwindigkeitsvorgabe (zum Beispiel durch Verkehrszeichen) warnt und/oder die Fahrzeuggeschwindigkeit selbstständig auf das geforderte bzw. eingestellte und vorgegebene Maß reduziert. Dadurch kann zum Beispiel auf einfache Weise sichergestellt werden, dass das Fahrzeug im Tunnel und damit im Bereich einer Nothaltebucht keine zu hohe Geschwindigkeit aufweist. Gegebenenfalls könnte in diesem Zusammenhang auch vorgesehen sein, dass bei einer durch das erfindungsgemäße Fahrerassistenzsystem ermittelten Tunnelfahrt eine vorgegebene bzw. voreingestellte Geschwindigkeit, zumindest vorübergehend während der Tunnelbefahrung, um einen definierten Sicherheitsbetrag reduziert ist.

Ferner könnte das erfindungsgemäße Fahrerassistenzsystem auch mit einem ACC (Adaptive Cruise Control)-System kombiniert werden, das vorausfahrende Fahrzeuge erkennt, deren Geschwindigkeiten ermittelt und durch Brems- und Motoreingriffe einen gewünschten Abstand einhält. Dadurch kann zum Beispiel auf einfache Weise sichergestellt werden, dass das Fahrzeug im Tunnel und damit im Bereich einer Nothaltebucht keine zu geringen Abstände zu vorausfahrenden Fahrzeugen aufweist. Gegebenenfalls könnte in diesem Zusammenhang auch vorgesehen sein, dass bei einer durch das erfindungsgemäße Fahrerassistenzsystem ermittelten Tunnelfahrt ein vorgegebener bzw. voreingestellter Abstand, zumindest vorübergehend während der Tunnelbefahrung, um einen definierten Sicherheitsbetrag erhöht ist.

Die vorstehend genannten Grenzen bzw. Fahrzeugverzögerungen können entweder empirisch festgelegt werden, zum Beispiel anhand länderspezifischer Bauvorschriften, oder aus baulichen Informationen über die Haltebuchten abgeleitet bzw. berechnet werden, welche man beispielsweise über eine Informationseinrichtung am Tunneleingang und/oder eine digitale Karte oder andere Sensoren oder Medien erhält.

Des Weiteren kann auch vorgesehen sein, dass das Fahrerassistenzsystem für den Fall, dass nur eine Spurmarkierung vorhanden sein sollte, zum Beispiel lediglich eine mittlere Spurmarkierung und keine seitliche Spurmarkierung, aus den im Fahrerassistenzsystem vorhandenen Informationen bzw. Daten und/oder aus den dem Fahrerassistenzsystem übermittelten Informationen bzw. Daten eine virtuelle Spurmarkierung, insbesondere seitliche Spurmarkierung, ermittelt, die wie eine tatsächlich vorhandene Spurmarkierung behandelt wird. Das heißt, dass diese für eine Bewertung der Umgebungsparameter und/oder von Fahrsituationen mittels des erfindungsgemäßen Fahrerassistenzsystems herangezogen werden kann.

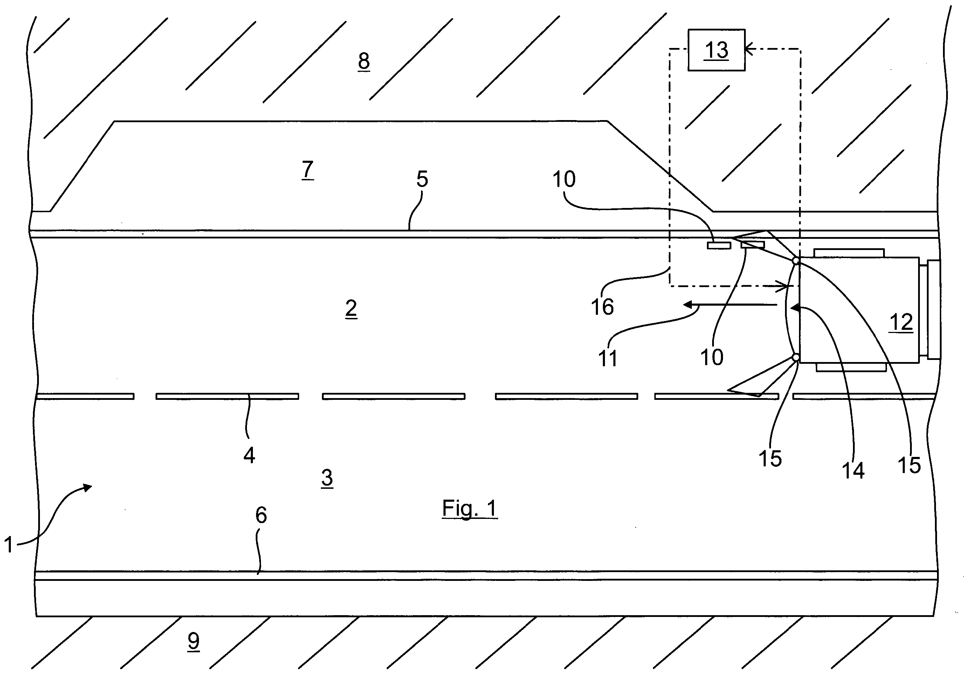

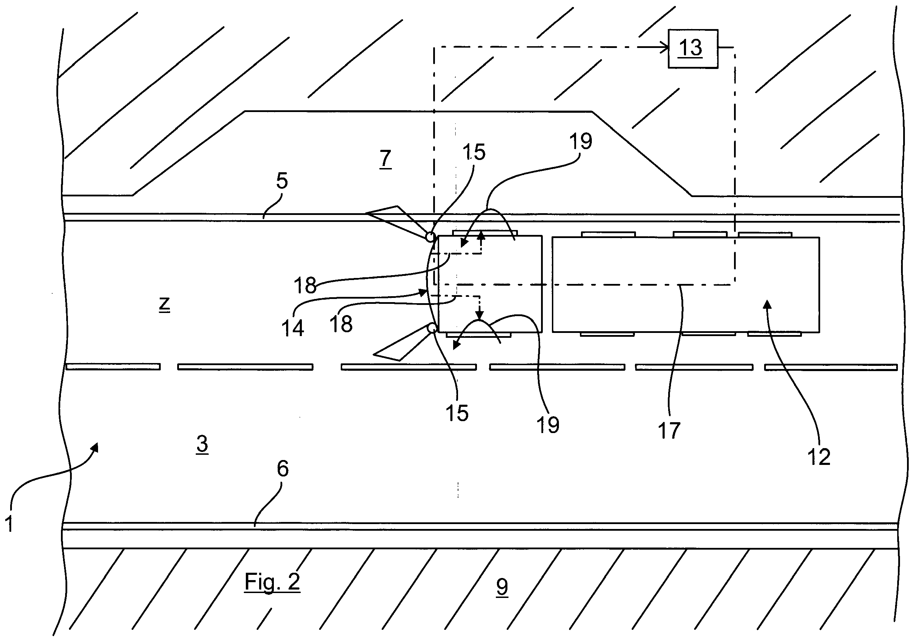

Die passive Sicherheitseinrichtung kann ebenfalls auf unterschiedliche ausgebildet sein, zum Beispiel eine den Fahrzeugführer optisch und/oder akustisch warnende und/oder haptisch (zum Beispiel Lenkradrattern, Sitzrattern etc.) auf den Fahrzeugführer einwirkende Warneinrichtung, die dann insbesondere auch Bestandteil einer Fahrspurüberwachungseinrichtung ist.
Gemäß einer weiteren besonders bevorzugten Ausgestaltung ist vorgesehen, dass die Überwachungseinrichtung eine Bewertungs- und/oder Klassifizierungseinrichtung aufweist, die, bei einer im Bereich einer Nothaltebucht erfassten Spurabweichung des Fahrzeugs und/oder bei einem erfassten Einfahren des Fahrzeugs in eine Nothaltebucht, die den Fahrer warnende passive Sicherheitseinrichtung und/oder die auf die Fahrzeugführung aktiv Einfluss nehmende aktive Sicherheitseinrichtung erst dann aktiviert, wenn die Bewertungs- und/oder Klassifizierungseinrichtung eine unbeabsichtigte Spurabweichung im Bereich der Nothaltebucht des Fahrzeugs und/oder ein unbeabsichtigtes Einfahren des Fahrzeugs in die Nothaltebucht festgestellt hat. Die Feststellung der Unabsichtlichkeit erfolgt bevorzugt auf der Basis der Auswertung fahrzeugseitiger Parameter, insbesondere, ob vom Fahrzeugführer ein das Einfahren in die Nothaltebucht anzeigender Fahrtrichtungsanzeiger gesetzt worden ist oder nicht.
Des Weiteren kann vorgesehen sein, dass durch Fahrerreaktionen, die einer drohenden Kollision entgegenwirken oder eindeutig den Fahrerwunsch ausdrücken, die aktiven Eingriffe und Warnungen übersteuert werden können. Das heißt, alle automatischen Einstellungsänderungen am Fahrerassistenzsystem sollen grundsätzlich vom Fahrzeugführer rückgängig gemacht bzw. übersteuert werden können.
Die Erfindung betrifft ferner ein Verfahren zur Überwachung der Tunneldurchfahrt eines Fahrzeugs, insbesondere eines Kraft- und/oder Nutzfahrzeugs, mittels eines Fahrerassistenzsystems nach nach Anspruch 23. Die sich hierdurch ergebenden Vorteile wurden bereits zuvor ausführlich dargestellt.
Eine beispielhafte Ausführungsform zur näheren Erläuterung der Funktionsweise eines erfindungsgemäßen Fahrerassistenzsystems zur Überwachung der Tunneldurchfahrt eines eine Nothaltebucht aufweisenden Tunnels wird nachfolgend anhand der Fig. 1 und 2 näher erläutert.
Es zeigen:
- Fig. 1: schematisch und beispielhaft einen Tunnelabschnitt mit einer Nothaltebucht bei Annäherung eines Fahrzeugs, und
- Fig. 2: die Darstellung nach Fig. 1 bei einem unbeabsichtigten Überfahren der Spurmarkierung im Bereich der Nothaltebucht.

Die Fig. 1 zeigt schematisch einen Teilabschnitt eines Tunnels 1, der hier zwei Fahrspuren 2, 3 aufweist, die jeweils voneinander durch einen Mittelstreifen 4 abgegrenzt sind und jeweils am seitlichen äußeren Fahrspurrand von einem durchgezogenen Randstreifen 5, 6 begrenzt sind.

Im Tunnel 1 ist auf der in der Bildebene der Fig. 1 oberen Fahrspur 2 eine hier lediglich äußerst schematisch und beispielhaft gezeigte Nothaltebucht 7 in die in der Bildebene oberen rechte Tunnelwand 8 integriert. Die in der Bildebene der Fig. 1 untere, linke Tunnelwand weist keine derartige Nothaltebucht 7 auf.

Unmittelbar zu Beginn der Nothaltebucht 7 ist parallel zum seitlichen Randstreifen 5 hier eine lediglich äußerst schematisch und beispielhaft durch zwei zusätzliche Fahrbahnmarkierungen dargestellte nothaltebuchtseitige Markierung 10 auf der rechten Fahrspur 2 angeordnet, die den Beginn der Nothaltebucht 7 (in Fahrtrichtung 11 gesehen) markieren soll. Diese nothaltebuchtseitige Markierung 10 wird zum Beispiel von einer Bestandteil einer fahrzeugseitigen Überwachungseinrichtung 13 bildenden Spurrückführungseinrichtung 14 erfasst, und zwar genauer gesagt von einer in der Bildebene der Fig. 1 oberen Kameraeinrichtung 15 der Spurrückführungseinrichtung 14 erfasst, die diese Bilddaten an die Überwachungseinrichtung 13 entsprechend des strichpunktierten Pfeils in der Fig. 1 übermittelt. Mittels zum Beispiel einer Bildauswertesoftware wird dann von der Überwachungseinrichtung 13 festgestellt, dass im Tunnel 1 eine Nothaltebucht 7 vorhanden ist.

Nach der Feststellung des Vorhandenseins der Nothaltebucht 7 können zum Beispiel die Grenzwerte für eine zulässige Fahrspurabweichung mittels der Überwachungseinrichtung 13 so verändert werden (Signalpfeil 16 in der Fig. 1), dass diese kleiner sind als die in der Spurrückführungseinrichtung 14 für eine zulässige Fahrspurabweichung auf einer, keine Tunneldurchfahrt darstellenden normalen Fahrstrecke. Wie die eben gemachten Ausführungen zeigen, kann die Spurrückführungseinrichtung 14 selbstverständlich auch eine herkömmliche Fahrspurüberwachungseinrichtung (Lane-Guard-System) beinhalten.

Stellt die Überwachungseinrichtung 13 dann, wie dies in der Fig. 2 lediglich äußerst schematisch und beispielhaft dargestellt ist, fest, dass es im Bereich der Nothaltebucht 7 zu einer Spurabweichung, insbesondere einer unbeabsichtigten Spurabweichung, des Fahrzeugs 12 bzw. zu einem Einfahren, insbesondere zu einem unbeabsichtigten Einfahren, des Fahrzeugs 12 in die Nothaltebucht 7 kommt (die Feststellung der Unabsichtlichkeit kann zum Beispiel davon abhängig gemacht werden, ob vom Fahrzeugführer ein das Einfahren anzeigender Fahrtrichtungsanzeiger gesetzt worden ist oder nicht), aktiviert die Überwachungseinrichtung entsprechend des Signalpfeils 17 sofort die Spurrückführungseinrichtung 14, die wiederum entsprechend der Signalpfeile 18 zum Beispiel die Spurführung bzw. Lenkung des Fahrzeugs so ansteuert, dass auf diese, beispielhaft dargestellt durch die Drehpfeile 19 ein Rückstellmoment ausgeübt wird, das das Fahrzeug 12 zurück in die Fahrspur 2 zwingt. Dadurch können unbeabsichtigte Kollisionen mit der Tunnelwand 8 der Nothaltebucht 7 zuverlässig vermieden werden.

Zusätzlich zu einem derartigen aktiven Spureingriff kann gegebenenfalls auch vorgesehen sein, dass die normale Spurverlassenswarnung intensiviert wird.

Das Fahrerassistenzsystem wurde hier vorliegend in Verbindung mit der Überwachung der Tunneldurchfahrt im Bereich einer Nothaltebucht als besonders gefährlicher Gefahrenstelle beschrieben. Grundsätzlich kann diese Assistenzfunktion aber auch an anderen, vergleichbaren Gefahrenstellen eingesetzt werden. In diesem Fall sollte dann eine individuell angepasste, von der Markierung von Nothaltebuchten abweichende Markierungsart der Gefahrenstelle genutzt werden.

## Patentansprüche

1. Fahrerassistenzsystem zur Unterstützung eines Fahrzeugführers beim Betrieb eines Fahrzeugs, insbesondere eines Kraft- und/oder Nutzfahrzeugs,
**dadurch gekennzeichnet,**
**dass** das Fahrerassistenzsystem zur Überwachung der Tunneldurchfahrt eines im Tunnelinneren wenigstens eine Nothaltebucht (7) aufweisenden Tunnels (1) eine fahrzeugseitige Überwachungseinrichtung (13) aufweist, mittels der, bei einer im Bereich einer Nothaltebucht (7) erfassten Spurabweichung des Fahrzeugs (12) und/oder bei einem erfassten Einfahren des Fahrzeugs (12) in eine Nothaltebucht (7), eine den Fahrer warnende passive Sicherheitseinrichtung und/oder eine auf die Fahrzeugführung aktiv Einfluss nehmende aktive Sicherheitseinrichtung (14) dergestalt aktivierbar ist, dass die Kollision mit einer nothaltebuchtseitigen Tunnelwand (8) verhinderbar oder zumindest in der Schwere reduzierbar ist,
**dass** wenigstens eine die Nothaltebucht (7) charakterisierende und/oder kennzeichnende Nothaltebucht-Signaleinrichtung (10) vorgesehen ist, die nothaltebuchtseitig und/oder tunnelseitig angeordnet ist,
**dass** mittels der Überwachungseinrichtung(13) die wenigstens eine Nothaltebucht-Signaleinrichtung (10) erfassbar und das Vorhandensein einer Nothaltebucht (7) feststellbar ist,
**dass** mittels der Überwachungseinrichtung (13) nach der Erfassung der Nothaltebucht (7) weiter überwachbar ist, ob das Fahrzeug (12) im Bereich der erfassten Nothaltebucht (7) von der Fahrspur (2) abweicht und/oder ob das Fahrzeug (12) in die erfasste Nothaltebucht (7) einfährt, und
**dass** mittels der Überwachungseinrichtung (13), bei einer im Bereich der Nothaltebucht (7) erfassten Spurabweichung des Fahrzeugs (12) und/oder bei einem erfassten Einfahren des Fahrzeugs (12) in die Nothaltebucht (7), die den Fahrer warnende passive Sicherheitseinrichtung und/oder die auf die Fahrzeugführung aktiv Einfluss nehmende aktive Sicherheitseinrichtung aktivierbar ist.

2. System nach Anspruch 1, **dadurch gekennzeichnet, dass** die Signaleinrichtung (10) durch wenigstens eine, vorzugsweise im Bereich der Nothaltebucht und/oder tunnelseitig angebrachte, nothaltebuchtseitige Markierung gebildet ist, die von der Überwachungseinrichtung (13), insbesondere von wenigstens einer Erfassungseinrichtung (15) der Überwachungseinrichtung (13), beim Annähern des Fahrzeugs (12) an die Nothaltebucht (7) erfassbar ist.

3. System nach Anspruch 2, **dadurch gekennzeichnet,**
**dass** die Markierung durch eine sich von der normalen Fahrbahnmarkierung (5) unterscheidende Nothaltebuchtmarkierung (10) gebildet ist,
**dass** die wenigstens eine Erfassungseinrichtung (15) durch eine Kamera- und/oder Sensoreinrichtung, vorzugsweise durch eine Bestandteil einer Spurerkennungseinrichtung bildende Kamera- und/oder Sensoreinrichtung, gebildet ist, die eine sich von der normalen Fahrbahnmarkierung (5) unterscheidende Nothaltebuchtmarkierung (10) erfasst, und
**dass** die Überwachungseinrichtung (13) bei mittels der Erfassungseinrichtung (15) erfasster Nothaltebuchtmarkierung (10) auf das Vorhandensein einer Nothaltebucht (7) schließt.

4. System nach Anspruch 2, **dadurch gekennzeichnet,**
**dass** die Markierung durch ein die Nothaltebucht, insbesondere den Beginn einer Nothaltebucht, kennzeichnendes Verkehrsschild gebildet ist,
**dass** die wenigstens eine Erfassungseinrichtung durch eine Kamera- und/oder Sensoreinrichtung, vorzugsweise durch eine Bestandteil einer Verkehrszeichen-Erkennungseinrichtung bildende Kamera- und/oder Sensoreinrichtung, gebildet ist, die das die Nothaltebucht kennzeichnende Verkehrsschild sowie die darauf vorhandene Nothaltebucht-Information erfasst, und
**dass** die Überwachungseinrichtung bei einem mittels der Erfassungseinrichtung erfassten, die Nothaltebucht kennzeichnenden Verkehrsschild auf das Vorhandensein einer Nothaltebucht schließt.

5. System nach Anspruch 2, **dadurch gekennzeichnet,**
**dass** die Markierung durch einen nothaltebuchtseitig angeordneten und die Nothaltebucht, insbesondere den Beginn einer Nothaltebucht, kennzeichnenden RFID (radio-frequency-radiation)-Transponder oder -Tag gebildet ist,
**dass** die wenigstens eine Erfassungseinrichtung durch ein fahrzeugseitiges Lesegerät gebildet ist, das ein elektromagnetisches Wechselfeld erzeugt, dem der nothaltebuchtseitige RFID-Transponder beim Annähern des Fahrzeugs an die Nothaltebucht ausgesetzt ist dergestalt, dass die Nothaltebuchtinformation an das Lesegerät übermittelt wird, und
**dass** die Überwachungseinrichtung bei einem mittels dem Lesegerät erfassten, die Nothaltebucht kennzeichnenden RFID-Tansponder oder -Tag auf das Vorhandensein einer Nothaltebucht schließt.

6. System nach einem der vorhergehenden Ansprüche, **dadurch gekennzeichnet,**
**dass** die Signaleinrichtung durch wenigstens einen, vorzugsweise nothaltebuchtseitig angeordneten Sender gebildet ist, dessen die Nothaltebucht, insbesondere den Beginn einer Nothaltebucht, kennzeichnendes Sendesignal von der Überwachungseinrichtung, insbesondere von einem fahrzeugseitigen Empfänger der Überwachungseinrichtung, beim Annähern des Fahrzeugs an die Nothaltebucht erfasst wird.

7. System nach Anspruch 6, **dadurch gekennzeichnet, dass** das Sendesignal ein Infrarotsignal oder ein Ultraschallsignal ist, das von einem fahrzeugseitigen Empfänger erfasst wird.

8. System nach einem der vorhergehenden Ansprüche, **dadurch gekennzeichnet, dass** die Signaleinrichtung so ausgebildet ist, dass mittels dieser eine Vielzahl von die jeweilige Nothaltebucht charakterisierenden Nothaltebucht-Information übermittel wird, insbesondere wenigstens den Beginn der Nothaltebucht sowie weiter die Länge und/oder Breite der Nothaltebucht übermittelt werden.

9. System nach einem der vorhergehende Ansprüche, **dadurch gekennzeichnet,**
**dass** die Information über das Vorhandensein einer Nothaltebucht in einem Bestandteil der Fahrstrecke bildenden Tunnel, in einem Navigationssystem des Fahrzeugs abgespeichert ist und der Überwachungseinrichtung im Falle des Befahrens des Tunnels übermittelt wird,
**dass** die Überwachungseinrichtung nach der Übermittlung der Nothaltebucht-Information durch das Navigationssystem weiter überwacht, ob das Fahrzeug beim Durchfahren des Tunnels im Bereich der Nothaltebucht von der Fahrspur abweicht und/oder ob das Fahrzeug beim Durchfahren des Tunnels in die Nothaltebucht einfährt, und
**dass** die Überwachungseinrichtung, bei einer im Bereich der Nothaltebucht erfassten Spurabweichung des Fahrzeugs und/oder bei einem erfassten Einfahren des Fahrzeugs in die Nothaltebucht, die den Fahrer warnende passive Sicherheitseinrichtung und/oder die auf die Fahrzeugführung aktiv Einfluss nehmende aktive Sicherheitseinrichtung aktiviert.

10. System nach Anspruch 9, **dadurch gekennzeichnet, dass** das Navigationssystem eine Vielzahl von die jeweilige Nothaltebucht charakterisierenden Daten an die Überwachungseinrichtung übermittelt, insbesondere wenigstens den Beginn sowie die Länge und/oder Breite der Nothaltebucht an die Überwachungseinrichtung übermittelt.

11. System nach einem der vorhergehende Ansprüche, **dadurch gekennzeichnet, dass** das Fahrerassistenzsystem eine fahrzeugseitige C2I-Schnittstelle aufweist, über die mittels C2I-Kommunikation definierte Tunnelinformationen zur Verfügung stellbar sind, insbesondere die Lage oder Position von Anfang und Ende einer Ausbuchtung und/oder die Anzahl der Fahrspuren und/oder die Spurbreiten und/oder die Spurmarkierungsarten und/oder die Tunnellänge und/oder die Sollgeschwindigkeit zur Verfügung gestellt werden.

12. System nach einem der vorhergehende Ansprüche, **dadurch gekennzeichnet, dass** eine Seiten-Überwachungseinrichtung vorgesehen ist, mittels der der Abstand zu und/oder die Höhe von seitlichen Hindernissen erfassbar und überwachbar ist, insbesondere dergestalt, dass bei Unterschreiten eines vorgegebenen oder voreingestellten Grenzwertes, insbesondere eines Abstandsgrenzwertes, die den Fahrer warnende passive Sicherheitseinrichtung und/oder die auf die Fahrzeugführung aktiv Einfluss nehmende aktive Sicherheitseinrichtung (14) aktiviert wird.

13. System nach einem der vorhergehenden Ansprüche, **dadurch gekennzeichnet, dass** die aktive Sicherheitseinrichtung (14) durch eine auf die Lenkung einwirkende und das Fahrzeug (12) in die Fahrspur (2) zurückführende Spurrückführungseinrichtung und/oder durch eine die Fahrzeuggeschwindigkeit in einem definierten Maße reduzierende Verzögerungseinrichtung gebildet ist.

14. System nach einem der vorhergehenden Ansprüche, **dadurch gekennzeichnet, dass** die Grenzwerte für eine zulässige Fahrspurabweichung bei einer Tunneldurchfahrt mittels der Überwachungseinrichtung (13) so verändert werden, dass diese kleiner sind als die Grenzwerte für eine zulässige Fahrspurabweichung auf einer keine Tunneldurchfahrt darstellenden normalen Fahrstrecke.

15. System nach Anspruch 13 und 14, **dadurch gekennzeichnet, dass** eine Fahrspurüberwachungseinrichtung und/oder eine Spurrückführungseinrichtung vorgesehen ist, insbesondere Bestandteil der Überwachungseinrichtung (13) bildet, mittels der die Grenzwerte für eine Fahrspurabweichung überwachbar sind.

16. System nach einem der Ansprüche 13 bis 15, **dadurch gekennzeichnet, dass** das Maß für die jeweilige Fahrzeugverzögerung von der Verzögerungseinrichtung in Abhängigkeit von der jeweils erfassten und/oder ermittelten Nothaltebuchtbeschaffenheit und/oder in Abhängigkeit von der aktuell erfassten Fahrzeuggeschwindigkeit vorgebbar ist, insbesondere dergestalt vorgebbar ist, dass bei einer, einen definierten Geschwindigkeitssschwellwert überschreitenden aktuellen Fahrzeuggeschwindigkeit eine Notbremsung, vorzugsweise mittels einer separaten Notbremseinrichtung des Fahrzeugs, einleitbar ist.

17. System nach einem der vorhergehenden Ansprüche, **dadurch gekennzeichnet, dass** das Fahrerassistenzsystem mit einem Speed Limiter kombiniert ist, der den Fahrzeugführer bei Überschreiten einer zuvor eingegebenen Höchstgeschwindigkeit und/oder bei Überschreiten einer erfassten Geschwindigkeitsvorgabe warnt und/oder die Fahrzeuggeschwindigkeit selbstständig auf das geforderte und/oder eingestellte und/oder vorgegebene Maß reduziert, wobei bevorzugt vorgesehen ist, dass bei einer durch das Fahrerassistenzsystem ermittelten Tunnelfahrt eine vorgegebene und/oder voreingestellte Geschwindigkeit, zumindest vorübergehend während der Tunnelbefahrung, um einen definierten Sicherheitsbetrag reduziert ist.

18. System nach einem der vorhergehenden Ansprüche, **dadurch gekennzeichnet, dass** das Fahrerassistenzsystem mit einem ACC (Adaptive Cruise Control)-System kombiniert ist, das vorausfahrende Fahrzeuge erkennt, deren Geschwindigkeit ermittelt und durch Brems- und Motoreingriffe einen gewünschten Abstand einhält, wobei bevorzugt vorgesehen ist, dass bei einer durch das Fahrerassistenzsystem ermittelten Tunnelfahrt ein vorgegebener bzw. voreingestellter Abstand, zumindest vorübergehend während der Tunnelbefahrung, um einen definierten Sicherheitsbetrag erhöht ist.

19. System nach einem der vorhergehenden Ansprüche, **dadurch gekennzeichnet, dass** das Fahrerassistenzsystem so ausgebildet ist, dass es für den Fall, dass nur eine Spurmarkierung vorhanden sein sollte, insbesondere lediglich eine mittlere Spurmarkierung und keine seitliche Spurmarkierung vorhanden sein sollte, aus den im Fahrerassistenzsystem vorhandenen Informationen oder Daten und/oder aus den dem Fahrerassistenzsystem übermittelten Informationen oder Daten eine virtuelle Spurmarkierung, insbesondere eine virtuelle seitliche Spurmarkierung, ermittelbar ist, die wie eine tatsächlich vorhandene Spurmarkierung behandelbar ist.

20. System nach einem der vorhergehenden Ansprüche, **dadurch gekennzeichnet, dass** die passive Sicherheitseinrichtung durch eine den Fahrzeugführer optisch und/oder akustisch warnende und/oder haptisch auf den Fahrzeugführer einwirkende Warneinrichtung gebildet ist, insbesondere Bestandteil einer Fahrspurüberwachungseinrichtung ist.

21. System nach einem der vorhergehenden Ansprüche, **dadurch gekennzeichnet, dass** die Überwachungseinrichtung (13) eine Bewertungs- und/oder Klassifizierungseinrichtung aufweist, die, bei einer im Bereich einer Nothaltebucht (7) erfassten Spurabweichung des Fahrzeugs (12) und/oder bei einem erfassten Einfahren des Fahrzeugs (12) in eine Nothaltebucht (7), die passive Sicherheitseinrichtung und/oder die aktive Sicherheitseinrichtung (14) erst dann aktiviert, wenn die Bewertungs- und/oder Klassifizierungseinrichtung eine unbeabsichtigte Spurabweichung im Bereich der Nothaltebucht (7) des Fahrzeugs (12) und/oder ein unbeabsichtigtes Einfahren des Fahrzeugs (12) in die Nothaltebucht (7) festgestellt hat, wobei bevorzugt vorgesehen ist, dass die Feststellung der Unabsichtlichkeit auf der Basis der Auswertung fahrzeugseitiger Parameter erfolgt, insbesondere, ob vom Fahrzeugführer ein das Einfahren in die Nothaltebucht (7) anzeigender Fahrtrichtungsanzeiger gesetzt worden ist oder nicht.

22. System nach einem der vorhergehenden Ansprüche, **dadurch gekennzeichnet, dass** die vom Fahrerassistenzsystem vorgesehenen Maßnahmen einer aktiven Sicherheitseinrichtung (14) durch definierte Fahrerreaktionen, die einer drohenden Kollision entgegenwirken oder den eindeutigen Fahrerwunsch erkennen lassen, übersteuerbar sind.

23. Verfahren zur Überwachung der Tunneldurchfahrt eines Fahrzeugs, insbesondere eines Kraft- und/oder Nutzfahrzeugs, mittels eines Fahrerassistenzsystems nach einem der vorhergehenden Ansprüche,
**dadurch gekennzeichnet,**
**dass** das Fahrerassistenzsystem zur Überwachung der Tunneldurchfahrt eines im Tunnelinneren wenigstens eine Nothaltebucht (7) aufweisenden Tunnels (1) eine fahrzeugseitige Überwachungseinrichtung (13) aufweist, die, bei einer im Bereich einer Nothaltebucht (7) erfassten Spurabweichung des Fahrzeugs (12) und/oder bei einem erfassten Einfahren des Fahrzeugs (12) in eine Nothaltebucht (7), eine den Fahrer warnende passive Sicherheitseinrichtung und/oder eine auf die Fahrzeugführung aktiv Einfluss nehmende aktive Sicherheitseinrichtung (14) dergestalt aktiviert, dass die Kollision mit einer nothaltebuchtseitigen Tunnelwand (8) verhindert oder zumindest in der Schwere reduziert ist,
**dass** wenigstens eine die Nothaltebucht (7) charakterisierende und/oder kennzeichnende Nothaltebucht-Signaleinrichtung (10) vorgesehen ist, die nothaltebuchtseitig und/oder tunnelseitig angeordnet ist,
**dass** die Überwachungseinrichtung(13) die wenigstens eine Nothaltebucht-Signaleinrichtung (10) erfasst und das Vorhandensein einer Nothaltebucht (7) feststellt,
**dass** die Überwachungseinrichtung (13) nach der Erfassung der Nothaltebucht (7) weiter überwacht, ob das Fahrzeug (12) im Bereich der erfassten Nothaltebucht (7) von der Fahrspur (2) abweicht und/oder ob das Fahrzeug (12) in die erfasste Nothaltebucht (7) einfährt, und
**dass** die Überwachungseinrichtung (13), bei einer im Bereich der Nothaltebucht (7) erfassten Spurabweichung des Fahrzeugs (12) und/oder bei einem erfassten Einfahren des Fahrzeugs (12) in die Nothaltebucht (7), die den Fahrer warnende passive Sicherheitseinrichtung und/oder die auf die Fahrzeugführung aktiv Einfluss nehmende aktive Sicherheitseinrichtung aktiviert.

24. Fahrzeug, insbesondere Nutzfahrzeug, mit einem Fahrerassistenzsystem nach einem der Ansprüche 1 bis 22.

## Claims

1. Driver assistance system for assisting a driver of a vehicle during the operation of a vehicle, in particular a motor vehicle and/or commercial vehicle,
**characterized**
**in that** the driver assistance system has a vehicle-side monitoring device (13) for monitoring the passage through a tunnel (1) which has at least one emergency stopping bay (7) in the interior of the tunnel, by means of which monitoring device (13) a passive safety device which warns the driver and/or an active safety device (14) which actively influences the guidance of the vehicle, in the event of a deviation from the lane by the vehicle (12), sensed in the region of an emergency stopping bay (7), and/or in the event of detected driving of the vehicle (12) into an emergency stopping bay (7), can be activated in such a way that the collision with an emergency-stopping-bay-side tunnel wall (8) can be prevented or at least reduced in severity,
**in that** at least one emergency stopping bay signal device (10) which characterizes the emergency stopping bay (7) and which is arranged on the emergency stopping bay side and/or tunnel side is provided,
**in that** the at least one emergency stopping bay signal device (10) can be sensed by means of the monitoring device (13), and the presence of an emergency stopping bay (7) can be detected,
**in that** after the sensing of the emergency stopping bay (7) the monitoring device (13) can continue to monitor whether the vehicle (12) deviates from the lane (2) in the region of the sensed emergency stopping bay (7) and/or whether the vehicle (12) drives into the sensed emergency stopping bay (7), and
**in that** in the event of a deviation from the lane by the vehicle (12), which is sensed in the region of the emergency stopping bay (7), and/or in the event of detected driving of the vehicle (12) into the emergency stopping bay (7) the passive safety device which warns the driver and/or the active safety device which actively influences the guidance of the vehicle can be activated by means of the monitoring device (13).

2. System according to Claim 1, **characterized in that** the signal device (10) is formed by at least one emergency-bay-side marking which is preferably provided in the region of the emergency stopping bay and/or on the tunnel side and can be sensed by the monitoring device (13), in particular by at least one sensing device (15) of the monitoring device (13), when the vehicle (12) approaches the emergency stopping bay (7).

3. System according to Claim 2, **characterized**
**in that** the marking is formed by an emergency stopping bay marking (10) which differs from the normal carriageway marking (5),
**in that** the at least one sensing device (15) is formed by a camera device and/or sensor device, preferably by a camera device and/or sensor device which forms a component of a lane-detection device, which senses an emergency stopping bay marking (10) which differs from the normal carriageway marking (5), and
**in that** in the case of an emergency stopping bay marking (10) which is sensed by means of the sensing device (15) the monitoring device (13) determines the presence of an emergency stopping bay (7).

4. System according to Claim 2, **characterized**
**in that** the marking is formed by a road sign which characterizes the emergency stopping bay, in particular the start of an emergency stopping bay,
**in that** the at least one sensing device is formed by a camera device and/or sensor device, preferably by a camera device and/or sensor device which forms a component of a road sign-detection device, which senses the road sign which characterizes the emergency stopping bay and the emergency stopping bay information which is provided thereon, and
**in that** in the case of a road sign which is sensed by means of the sensing device and which characterizes the emergency stopping bay the monitoring device determines the presence of an emergency stopping bay.

5. System according to Claim 2, **characterized**
**in that** the marking is formed by an RFID (radio frequency radiation) transponder or tag which is arranged on the emergency stopping bay side and characterizes the emergency stopping bay, in particular the start of an emergency stopping bay,
**in that** the at least one sensing device is formed by a vehicle-side reader device which generates an electromagnetic alternating field to which the emergency-stopping-bay-side RFID transponder is subjected when the vehicle approaches the emergency stopping bay, in such a way that the emergency stopping bay information is transmitted to the reader device, and
**in that** in the case of an RFID transponder or RFID tag which is sensed by means of the reader device and which characterizes the emergency stopping bay the monitoring device determines the presence of an emergency stopping bay.

6. System according to one of the preceding claims, **characterized in that** the signal device is formed by at least one transmitter, which is preferably arranged on the emergency stopping bay side, the transmission signal of which transmitter, which characterizes the emergency stopping bay, in particular the start of an emergency stopping bay, is sensed by the monitoring device, in particular by a vehicle-side receiver of the monitoring device, when the vehicle approaches the emergency stopping bay.

7. System according to Claim 6, **characterized in that** the transmission signal is an infrared signal or an ultrasonic signal which is sensed by a vehicle-side receiver.

8. System according to one of the preceding claims, **characterized in that** the signal device is embodied in such a way that it transmits a multiplicity of emergency stopping bay information items which characterize the respective emergency stopping bay, in particular at least the start of the emergency stopping bay and also the length and/or width of the emergency stopping bay are transmitted.

9. System according to one of the preceding claims, **characterized**
**in that** the information about the presence of an emergency stopping bay in a tunnel forming a component of the route is stored in a navigation system of the vehicle and is transmitted to the monitoring device when the tunnel is travelled through,
**in that** after the transmission of the emergency stopping bay information by the navigation system the monitoring device also monitors whether the vehicle deviates from the lane when travelling through the tunnel in the region of the emergency stopping bay and/or whether the vehicle drives into the emergency stopping bay when driving through the tunnel, and
**in that** in the case of a lane deviation of the vehicle, sensed in the region of the emergency stopping bay, and/or in the case of detected driving of the vehicle into the emergency stopping bay, the monitoring device activates the passive safety device which warns the driver and/or the active safety device which actively influences the guidance of the vehicle.

10. System according to Claim 9, **characterized in that** the navigation system transmits a multiplicity of data items characterizing the respective emergency stopping bay to the monitoring device, in particular transmits at least the start and the length and/or width of the emergency stopping bay to the monitoring device.

11. System according to one of the preceding claims, **characterized in that** the driver assistance system has a vehicle-side C2I interface via which tunnel information items are made available which are defined by means of C2I communication, in particular, the position of the start and end of a recess and/or the number of lanes and/or the lane widths and/or the types of lane markings and/or the length of the tunnel and/or the target speed are made available.

12. System according to one of the preceding claims, **characterized in that** a side monitoring device is provided by means of which the distance from lateral obstacles and/or the height of lateral obstacles can be sensed and monitored, in particular in such a way that when a predefined or preset limiting value, in particular a distance limiting value, is undershot, the passive safety device which warns the driver and/or the active safety device (14) which actively influences the guidance of the vehicle are/is activated.

13. System according to one of the preceding claims, **characterized in that** the active safety device (14) is formed by a lane return device which acts on the steering and returns the vehicle (12) into the lane (2) and/or by a deceleration device which reduces the speed of the vehicle by a defined amount.

14. System according to one of the preceding claims, **characterized in that** the limiting values for a permissible deviation from the lane when travelling through a tunnel are changed by means of the monitoring device (13) in such a way that they are smaller than the limiting values for a permissible deviation from the lane on a normal route which does not represent travel through a tunnel.

15. System according to Claims 13 and 14, **characterized in that** a lane monitoring device and/or a lane return device are/is provided, and form/forms in particular a component of the monitoring device (13) by means of which the limiting values for deviation from the lane can be monitored.

16. System according to one of Claims 13 to 15, **characterized in that** the measure of the respective vehicle deceleration can be predefined by the deceleration device as a function of the respectively sensed and/or determined condition of the emergency stopping bay and/or as a function of the currently sensed vehicle speed, in particular can be predefined in such a way that in the case of a current vehicle speed which exceeds a defined speed threshold value an emergency braking operation can be initiated, preferably by means of a separate emergency brake device of the vehicle.

17. System according to one of the preceding claims, **characterized in that** the driver assistance system is combined with a speed limiter which warns the driver of the vehicle when a previously input maximum speed is exceeded and/or when a sensed speed predefinition is exceeded, and/or reduces the vehicle speed automatically to the required and/or set and/or predefined measure, wherein there is preferably provision that in the case of travel through a tunnel which is determined by the driver assistance system a predefined and/or preset speed is reduced by a defined safety value, at least temporarily during the travel through the tunnel.

18. System according to one of the preceding claims, **characterized in that** the driver assistance system is combined with an ACC (Adaptive Cruise Control) system which detects vehicles travelling ahead, determines their speed and maintains a desired distance by means of braking interventions and engine interventions, wherein there is preferably provision that in the case of travel through a tunnel which is determined by the driver assistance system a predefined or preset distance is increased by a defined safety value, at least temporarily during the travel through the tunnel.

19. System according to one of the preceding claims, **characterized in that** the driver assistance system is embodied in such a way that in the event of only one lane marking being present, in particular only one central lane marking and no lateral lane marking being present, a virtual lane marking, in particular a virtual lateral lane marking can be determined from the information or data present in the driver assistance system and/or from the information or data transmitted to the driver assistance system, which lane marking can be treated like an actually present lane marking.

20. System according to one of the preceding claims, **characterized in that** the passive safety device is formed by a warning device which warns the driver of the vehicle visually and/or acoustically and/or acts haptically on the driver of the vehicle, and is, in particular, a component of a lane monitoring device.

21. System according to one of the preceding claims, **characterized in that** the monitoring device (13) has an evaluation and/or classification device which in the event of a deviation from the lane by the vehicle (12), which is sensed in the region of an emergency stopping bay (7) and/or in the event of detected driving of the vehicle (12) into an emergency stopping bay (7) does not activate the passive safety device and/or the active safety device (14) until the evaluation and/or classification device has detected unintentional deviation from the lane in the region of the emergency stopping bay (7) of the vehicle (12) and/or an intentional driving of the vehicle (12) into the emergency stopping bay (7), wherein there is preferably provision that the detection of the lack of intention is carried out on the basis of the evaluation of the vehicle-side parameters, in particular whether a vehicle direction indicator which indicates the driving into the emergency stopping bay (7) has been set or not.

22. System according to one of the preceding claims, **characterized in that** the measures of an active safety device (14) which are provided by the driver assistance system can be overridden by defined driver reactions which counteract an imminent collision or permit detection of the unambiguous driver's request.

23. Method for monitoring the travel through a tunnel by a vehicle, in particular by a motor vehicle and/or commercial vehicle, by means of a driver assistance system according to one of the preceding claims,
**characterized**
**in that** the driver assistance system has a vehicle-side monitoring device (13) for monitoring the passage through a tunnel (1) which has at least one emergency stopping bay (7) in the interior of the tunnel, by means of which monitoring device (13) a passive safety device which warns the driver and/or an active safety device (14) which actively influences the guidance of the vehicle, in the event of a deviation from the lane by the vehicle (12), sensed in the region of an emergency stopping bay (7), and/or in the event of detected driving of the vehicle (12) into an emergency stopping bay (7), is activated in such a way that the collision with an emergency-stopping-bay-side tunnel wall (8) is prevented or at least reduced in severity,
**in that** at least one emergency stopping bay signal device (10) which characterizes the emergency stopping bay (7) and which is arranged on the emergency stopping bay side and/or tunnel side is provided,
**in that** the at least one emergency stopping bay signal device (10) is sensed by means of the monitoring device (13), and the presence of an emergency stopping bay (7) is detected,
**in that** after the sensing of the emergency stopping bay (7) the monitoring device (13) continues to monitor whether the vehicle (12) deviates from the lane (2) in the region of the sensed emergency stopping bay (7) and/or whether the vehicle (12) drives into the sensed emergency stopping bay (7), and
**in that** in the event of a deviation from the lane by the vehicle (12), which is sensed in the region of the emergency stopping bay (7), and/or in the event of detected driving of the vehicle (12) into the emergency stopping bay (7) the passive safety device which warns the driver and/or the active safety device which actively influences the guidance of the vehicle is activated by means of the monitoring device (13).

24. Vehicle, in particular commercial vehicle, having a driver assistance system according to one of Claims 1 to 22.

## Revendications

1. Système d'aide à la conduite pour assister un conducteur de véhicule lors du fonctionnement d'un véhicule, en particulier d'un véhicule automobile et/ou d'un véhicule utilitaire,
**caractérisé en ce que**
le système d'aide à la conduite, pour surveiller la conduite à travers un tunnel (1) présentant à l'intérieur du tunnel au moins une zone d'arrêt d'urgence (7), présente un dispositif de surveillance (13) du côté du véhicule au moyen duquel, dans le cas de la détection d'un écart de voie du véhicule (12) dans la région d'une zone d'arrêt d'urgence (7) et/ou dans le cas de la détection de l'entrée du véhicule (12) dans une zone d'arrêt d'urgence (7), un dispositif de sécurité passif avertissant le conducteur et/ou un dispositif de sécurité actif (14) influençant activement la conduite du véhicule, peuvent être activés de telle sorte qu'une collision avec une paroi du tunnel (8) du côté de la zone d'arrêt d'urgence puisse être évitée ou que sa gravité puisse au moins être réduite,
**en ce qu'**au moins un dispositif de signalisation (10) de zone d'arrêt d'urgence caractérisant et/ou indiquant la zone d'arrêt d'urgence (7) est prévu, lequel est disposé du côté du tunnel et/ou du côté de la zone d'arrêt d'urgence,
**en ce qu'**au moyen du dispositif de surveillance (13), l'au moins un dispositif de signalisation (10) de zone d'arrêt d'urgence peut être détecté et la présence d'une zone d'arrêt d'urgence (7) peut être constatée,
**en ce qu'**au moyen du dispositif de surveillance (13), après la détection de la zone d'arrêt d'urgence (7), on peut à nouveau surveiller si le véhicule (12) dans la région de la zone d'arrêt d'urgence détectée (7) s'écarte de la voie de circulation (2) et/ou si le véhicule (12) entre dans la zone d'arrêt d'urgence détectée (7), et
**en ce qu'**au moyen du dispositif de surveillance (13), dans le cas de la détection d'un écart de voie du véhicule (12) dans la région de la zone d'arrêt d'urgence (7) et/ou dans le cas de la détection de l'entrée du véhicule (12) dans la zone d'arrêt d'urgence (7), le dispositif de sécurité passif avertissant le conducteur et/ou le dispositif de sécurité actif influençant activement la conduite du véhicule peuvent être activés.

2. Système selon la revendication 1, **caractérisé en ce que** le dispositif de signalisation (10) est formé par au moins un marquage du côté de la zone d'arrêt d'urgence, de préférence monté dans la région de la zone d'arrêt d'urgence et/ou du côté du tunnel, lequel peut être détecté par le dispositif de surveillance (13), en particulier par au moins un dispositif de détection (15) du dispositif de surveillance (13), lors du rapprochement du véhicule (12) de la zone d'arrêt d'urgence (7).

3. Système selon la revendication 2, **caractérisé en ce que**
le marquage est formé par un marquage de zone d'arrêt d'urgence (10) différent du marquage normal de la route (5),
**en ce que** l'au moins un dispositif de détection (15) est formé par un dispositif de caméra et/ou de capteur, de préférence par un constituant d'un dispositif de caméra et/ou de capteur faisant partie d'un dispositif de détection de voie, qui détecte un marquage de la zone d'arrêt d'urgence (10) différent du marquage normal de la route (5), et
**en ce que** le dispositif de surveillance (13), dans le cas de la détection d'un marquage de zone d'arrêt d'urgence (10) au moyen du dispositif de détection (15), en conclut à la présence d'une zone d'arrêt d'urgence (7).

4. Système selon la revendication 2, **caractérisé en ce que**
le marquage est formé par un panneau de circulation indiquant la voie d'arrêt d'urgence, en particulier le début d'une voie d'arrêt d'urgence,
**en ce que** l'au moins un dispositif de détection est formé par un dispositif de caméra et/ou de capteur, de préférence par un dispositif de caméra et/ou de capteur faisant partie d'un dispositif de détection de signalisation routière, qui détecte le panneau de circulation indiquant la zone d'arrêt d'urgence et qui détecte l'information de zone d'arrêt d'urgence indiquée sur celui-ci, et
**en ce que** le dispositif de surveillance, lors de la détection par le dispositif de détection d'un panneau de circulation indiquant la zone d'arrêt d'urgence, en conclut à la présence d'une zone d'arrêt d'urgence.

5. Système selon la revendication 2, **caractérisé en ce que**
le marquage est formé par un transpondeur ou une étiquette RFID (radio-frequency-radiation) disposé du côté de la zone d'arrêt d'urgence et indiquant la zone d'arrêt d'urgence, en particulier le début de la zone d'arrêt d'urgence,
**en ce que** l'au moins un dispositif de détection est formé par un appareil de lecture du côté du véhicule, qui produit un champ alternatif électromagnétique auquel est exposé le transpondeur RFID du côté de la zone d'arrêt d'urgence lors du rapprochement du véhicule de la zone d'arrêt d'urgence, de telle sorte que l'information de zone d'arrêt d'urgence soit communiquée à l'appareil de lecture, et
**en ce que** le dispositif de surveillance, à la détection par l'appareil de lecture d'un transpondeur ou d'une étiquette RFID indiquant la zone d'arrêt d'urgence, en conclut à la présence d'une zone d'arrêt d'urgence.

6. Système selon l'une quelconque des revendications précédentes, **caractérisé en ce que** le dispositif de signalisation est formé par au moins un émetteur disposé de préférence du côté de la zone d'arrêt d'urgence, dont le signal émis indiquant la zone d'arrêt d'urgence, en particulier le début d'une zone d'arrêt d'urgence, est détecté par le dispositif de surveillance, en particulier par un récepteur du dispositif de surveillance du côté du véhicule, lors du rapprochement du véhicule de la zone d'arrêt d'urgence.

7. Système selon la revendication 6, **caractérisé en ce que** le signal émis est un signal infrarouge ou un signal à ultrasons qui est détecté par un récepteur du côté du véhicule.

8. Système selon l'une quelconque des revendications précédentes, **caractérisé en ce que** le dispositif de signal est configuré de telle sorte qu'au moyen de celui-ci une pluralité d'informations de zone d'arrêt d'urgence caractérisant la zone de d'arrêt d'urgence respective soient communiquées, en particulier au moins le début de la zone d'arrêt d'urgence ainsi que la longueur et/ou la largeur de la zone d'arrêt d'urgence.

9. Système selon l'une quelconque des revendications précédentes, **caractérisé en ce que**
l'information concernant la présence d'une zone d'arrêt d'urgence dans un tunnel formant une partie de la route est mémorisée dans un système de navigation du véhicule et est communiquée au dispositif de surveillance lors de la conduite à travers un tunnel,
**en ce que** le dispositif de surveillance, après la communication de l'information de la zone d'arrêt d'urgence par le système de navigation, surveille en outre si le véhicule, lors de la conduite à travers le tunnel, s'écarte de la voie de circulation dans la région de la zone d'arrêt d'urgence et/ou si le véhicule entre dans la zone d'arrêt d'urgence lors de la conduite à travers le tunnel, et
**en ce que** le dispositif de surveillance, lors de la détection d'un écart de la voie du véhicule dans la région de la zone d'arrêt d'urgence et/ou lors de la détection de l'entrée du véhicule dans la zone d'arrêt d'urgence, active le dispositif de sécurité passif avertissant le conducteur et/ou active le dispositif de sécurité actif influençant activement la conduite du véhicule.

10. Système selon la revendication 9, **caractérisé en ce que** le système de navigation communique une pluralité de données caractérisant la zone d'arrêt d'urgence respective au dispositif de surveillance, en particulier communique au moins le début ainsi que la longueur et/ou la largeur de la zone d'arrêt d'urgence au dispositif de surveillance.

11. Système selon l'une quelconque des revendications précédentes, **caractérisé en ce que** le système d'aide à la conduite présente une interface C2I du côté du véhicule, par le biais de laquelle des informations de tunnel définies au moyen d'une communication C2I peuvent être mises à disposition, en particulier la position ou l'emplacement du début et de la fin d'un élargissement et/ou le nombre des voies de circulation et/ou la largeur des voies et/ou les types de marquage des voies et/ou la longueur du tunnel et/ou la vitesse de consigne.

12. Système selon l'une quelconque des revendications précédentes, **caractérisé en ce qu**'un dispositif de surveillance des côtés est prévu, au moyen duquel l'éloignement et/ou la hauteur d'obstacles latéraux peuvent être détectés et surveillés, en particulier de telle sorte qu'en dessous d'une valeur limite prédéfinie ou préajustée, en particulier en dessous d'une valeur de distance limite, le dispositif de sécurité passif avertissant le conducteur et/ou le dispositif de sécurité actif (14) influençant activement la conduite du véhicule sont activés.

13. Système selon l'une quelconque des revendications précédentes, **caractérisé en ce que** le dispositif de sécurité actif (14) est formé par un dispositif de rétablissement sur la voie agissant sur la direction et ramenant le véhicule (12) dans la voie de circulation (2) et/ou par un dispositif de ralentissement réduisant la vitesse du véhicule dans une mesure définie.

14. Système selon l'une quelconque des revendications précédentes, **caractérisé en ce que** les valeurs limites pour un écart de voie de circulation admissible dans le cas d'une conduite à travers un tunnel sont modifiées au moyen du dispositif de surveillance (13) de telle sorte qu'elles soient inférieures aux valeurs limites pour un écart de voie de circulation admissible sur une section de route normale n'impliquant pas de conduite à travers un tunnel.

15. Système selon les revendications 13 et 14, **caractérisé en ce qu**'un dispositif de surveillance de voie de circulation et/ou un dispositif de rétablissement sur la voie sont prévus, en particulier font partie du dispositif de surveillance (13), au moyen duquel les valeurs limites pour un écart de voie de circulation peuvent être surveillées.

16. Système selon l'une quelconque des revendications 13 à 15, **caractérisé en ce que** la mesure pour un ralentissement respectif du véhicule par le dispositif de ralentissement peut être prédéfinie en fonction de l'occupation d'une zone d'arrêt d'urgence respectivement détectée et/ou déterminée et/ou en fonction de la vitesse actuelle détectée du véhicule, en particulier peut être prédéfinie de telle sorte que dans le cas d'une vitesse du véhicule actuelle dépassant une valeur seuil de vitesse définie, un freinage d'urgence, de préférence au moyen d'un dispositif de freinage d'urgence séparé du véhicule, puisse être amorcé.

17. Système selon l'une quelconque des revendications précédentes, **caractérisé en ce que** le système d'aide à la conduite est combiné à un limiteur de vitesse qui avertit le conducteur du véhicule en cas de dépassement d'une vitesse maximale supérieure prédéfinie à l'avance et/ou en cas de dépassement d'une vitesse de consigne détectée et/ou réduit la vitesse du véhicule automatiquement à la mesure exigée et/ou ajustée et/ou prédéfinie, et de préférence il est prévu que dans le cas de la détection par le système d'aide à la conduite d'une conduite à travers un tunnel, une vitesse prédéfinie et/ou préajustée soit réduite d'une mesure de sécurité définie au moins essentiellement pendant la conduite à travers le tunnel.

18. Système selon l'une quelconque des revendications précédentes, **caractérisé en ce que** le système d'aide à la conduite est combiné à un système ACC (adaptative cruise control) qui détecte les véhicules circulant devant, détecte leur vitesse et maintient une distance souhaitée par des interventions de freinage et des interventions sur le moteur, et de préférence il est prévu que dans le cas de la détermination d'une conduite à travers un tunnel par le système d'aide à la conduite, une distance prédéfinie ou préajustée soit augmentée dans une mesure de sécurité définie au moins essentiellement pendant la conduite à travers le tunnel.

19. Système selon l'une quelconque des revendications précédentes, **caractérisé en ce que** le système d'aide à la conduite est réalisé de telle sorte que dans le cas où il n'y aurait qu'un seul marquage de voie, en particulier lorsqu'il y a seulement un marquage de voie central et qu'aucun marquage de voie latéral n'est prévu, on peut, à partir des informations ou des données présentes dans le système d'assistance à la conduite et/ou à partir des informations ou des données transmises au système d'aide à la conduite, établir un sous-marquage de voie virtuel, en particulier un marquage de voie latéral virtuel qui peut être traité comme un marquage de voie effectivement existant.

20. Système selon l'une quelconque des revendications précédentes, **caractérisé en ce que** le dispositif de sécurité passif est formé par un dispositif d'avertissement produisant un avertissement optique et/ou acoustique pour le conducteur du véhicule et/ou agissant de manière tactile sur le conducteur du véhicule, en particulier qui constitue une partie d'un dispositif de surveillance de voie de circulation.

21. Système selon l'une quelconque des revendications précédentes, **caractérisé en ce que** le dispositif de surveillance (13) présente un dispositif d'analyse et/ou de classification qui, dans le cas d'un écart de voie du véhicule (12) détecté dans la région d'une zone d'arrêt d'urgence (7) et/ou dans le cas de la détection d'une entrée du véhicule (12) dans une zone d'arrêt d'urgence (7), active le dispositif de sécurité passif et/ou le dispositif de sécurité actif (14) seulement si le dispositif d'analyse et/ou de classification a constaté un écart de voie accidentel dans la région de la zone d'arrêt d'urgence (7) du véhicule (12) et/ou une entrée accidentelle du véhicule (12) dans la zone d'arrêt d'urgence (7), l'établissement d'un état accidentel s'effectuant de préférence sur la base de l'analyse des paramètres du côté du véhicule, en particulier si le conducteur du véhicule a activé ou non un indicateur de direction indiquant l'entrée dans la zone d'arrêt d'urgence (7).

22. Système selon l'une quelconque des revendications précédentes, **caractérisé en ce que** les mesures d'un dispositif de sécurité actif (14) prévues par le système d'aide à la conduite peuvent être contrôlées par des réactions définies du conducteur qui agissent à l'encontre d'une collision imminente ou qui permettent de reconnaître un souhait univoque du conducteur.

23. Procédé de surveillance de la conduite d'un véhicule à travers un tunnel, en particulier d'un véhicule automobile et/ou utilitaire, au moyen d'un système d'aide à la conduite selon l'une quelconque des revendications précédentes,
**caractérisé en ce que**
le système d'aide à la conduite, pour la surveillance de la conduite à travers un tunnel (1) présentant à l'intérieur du tunnel au moins une zone d'arrêt d'urgence (7), présente un dispositif de surveillance (13) du côté du véhicule qui, dans le cas de la détection d'un écart de la voie du véhicule (12) dans la région d'une zone d'arrêt d'urgence (7) et/ou dans le cas de la détection de l'entrée du véhicule (12) dans une zone d'arrêt d'urgence (7), active un dispositif de sécurité passif avertissant le conducteur et/ou un dispositif de sécurité actif (14) influençant activement la conduite du véhicule, de telle sorte qu'une collision avec une paroi du tunnel du côté de la zone d'arrêt d'urgence (8) soit évitée ou que sa gravité soit réduite,
**en ce qu'**au moins un dispositif de signalisation (10) de zone d'arrêt d'urgence caractérisant et/ou indiquant une zone d'arrêt d'urgence (7) est prévu, lequel est disposé du côté de la zone d'arrêt d'urgence et/ou du côté du tunnel,
**en ce que** le dispositif de surveillance (13) détecte l'au moins un dispositif de signalisation (10) de zone d'arrêt d'urgence et la présence d'une zone d'arrêt d'urgence (7),
**en ce que** le dispositif de surveillance (13), après la détection de la zone d'arrêt d'urgence (7), détecte en outre si le véhicule (12) dans la région de la zone d'arrêt d'urgence détectée (7) s'écarte de la voie de conduite (2) et/ou si le véhicule (12) entre dans la zone d'arrêt d'urgence détectée (7), et
**en ce que** le dispositif de surveillance (13), dans le cas de la détection d'un écart de voie du véhicule (12) dans la région de la zone d'arrêt d'urgence (7) et/ou dans le cas de la détection de l'entrée du véhicule (12) dans la zone d'arrêt d'urgence (7), active le dispositif de sécurité passif avertissant le conducteur et/ou le dispositif de sécurité actif influençant activement la conduite du véhicule.

24. Véhicule, en particulier véhicule utilitaire, comprenant un système d'aide à la conduite selon l'une quelconque des revendications 1 à 22.
